(19) Europäisches Patentamt
European Patent Office
Office européen des brevets

(11) **EP 4 760 825 A1**

(12) **EUROPEAN PATENT APPLICATION**
published in accordance with Art. 153(4) EPC

(43) Date of publication:
**17.06.2026 Bulletin 2026/25**

(21) Application number: **24856753.9**

(22) Date of filing: **16.08.2024**

(51) International Patent Classification (IPC):
***H01M 4/66** (2006.01)* ***H01M 4/13** (2010.01)*
***H01M 10/052** (2010.01)*

(52) Cooperative Patent Classification (CPC):
**H01M 4/13; H01M 4/66; H01M 10/052;** Y02E 60/10

(86) International application number:
**PCT/KR2024/012216**

(87) International publication number:
**WO 2025/042141 (27.02.2025 Gazette 2025/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.08.2023 KR 20230108436**

(71) Applicants:
- **LG Chem, Ltd.**
  **Seoul 07336 (KR)**
- **LG Energy Solution, Ltd.**
  **Seoul 07335 (KR)**

(72) Inventors:
- **KANG, Joon Koo**
  **Daejeon 34122 (KR)**
- **SONG, In Taek**
  **Daejeon 34122 (KR)**
- **KIM, Ki Hwan**
  **Daejeon 34122 (KR)**
- **KOH, Jong Kwan**
  **Daejeon 34122 (KR)**
- **YANG, Hee Myeong**
  **Daejeon 34122 (KR)**
- **CHO, Woo Hyung**
  **Daejeon 34122 (KR)**
- **KWON, Soon Ho**
  **Daejeon 34122 (KR)**
- **PARK, Sung Bin**
  **Daejeon 34122 (KR)**
- **LEE, Seok Kyeong**
  **Daejeon 34122 (KR)**

(74) Representative: **Plasseraud IP**
**104 Rue de Richelieu**
**CS92104**
**75080 Paris Cedex 02 (FR)**

(54) **CURRENT COLLECTOR**

(57) The present application relates to a current collector and a use thereof. The present application can provide a current collector capable of forming an electrode that does not affect performance and operation of a secondary battery by exhibiting excellent electrical characteristics, including low resistance, in a normal state, and can secure stability by blocking energization of an electrode assembly through an increase in resistance in an abnormal state, and a use thereof.

[Figure 1]

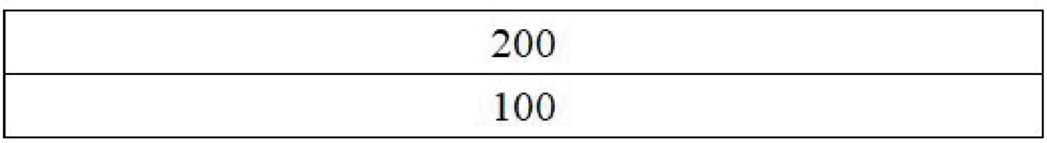


EP 4 760 825 A1

## Description

### Technical Field

This application claims the benefit of priority based on Korean Patent Application No. 10-2023-0108436 dated August 18, 2023, the disclosure of which is incorporated herein by reference in its entirety.
The present specification discloses a current collector and a use thereof.

### Background Art

An energy storage technology has expanded application areas to mobile phones, tablet and notebook PCs, or electric vehicles, and the like.
As the data processing speed of mobile devices such as mobile phones or tablets increases and their used hours also increase, the development of secondary batteries with high energy density and operating potential, long cycle life, and low self-discharge rate is in progress.
As major developed countries suppress production of cars driven by internal combustion engines to alleviate global warming and air pollution, major automobile manufacturers also develop various electric vehicles, and thus the importance of secondary batteries having high energy density, high discharge voltage, and output stability increases as driving sources thereof.
According to the above trend, the occurrence frequency of ignition or explosion accidents due to overcharging, high-temperature exposure or outer shocks, and the like in devices or automobiles using secondary batteries as an energy source also increases.
As a main cause of such accidents, a short phenomenon, in which a positive electrode and a negative electrode inside an electrode assembly come into direct contact with each other mainly due to external stimuli, is known. When the secondary battery is overcharged or exposed to high temperatures or external stimuli, the short phenomenon can occur by the separator shrinkage due to the internal temperature increase of the secondary battery, or the internal structure destruction of the secondary battery due to outer shocks, and the like.
When the short phenomenon occurs, migration of lithium ions and electrons is concentrated through the region where the positive electrode and the negative electrode are in direct contact with each other, so that internal heat generation can be promoted. Accordingly, it is known that as gas or the like is generated inside the battery, the volume expands, and the risk of ignition increases.

### Disclosure

### Technical Problem

The present application relates to a current collector, an electrode, and a use thereof. The present application is intended to provide a current collector and an electrode that does not affect performance and operation of a secondary battery by exhibiting low resistance and excellent electrical characteristics in a normal state, and can secure stability through an increase in resistance in an abnormal state. The present application is also intended to provide a use of the current collector and electrode.

### Technical Solution

In this specification, the term room temperature means a natural temperature without warming and cooling, which may mean, for example, any temperature within a range of 10°C to 30°C, or a temperature of about 23°C, about 25°C, or about 27°C or so.
Among physical properties mentioned in this specification, when the measurement temperature affects the physical property, the relevant physical property is a physical property measured at the room temperature, unless otherwise specified. The unit of temperature mentioned in this specification is Celsius (°C), unless otherwise specified.
In this specification, the term normal pressure means a natural pressure without pressurization and depressurization, which may usually mean a pressure of about 730 mmHg to 790 mmHg or so.
Among physical properties mentioned in this specification, when the measurement pressure affects the physical property, the relevant physical property is a physical property measured at the normal pressure, unless otherwise specified.
Among physical properties mentioned in this specification, when the measurement humidity affects the physical property, the relevant physical property is a physical property measured at standard-state humidity, unless otherwise specified.

In this specification, the standard-state humidity means any relative humidity within a range of 40% to 60%, which mean, for example, a relative humidity of about 40%, 45%, 50%, 55%, or 60% or so.

In this specification, the term normal state means a normal operating state (e.g., a normal charging or discharging state of a secondary battery) and/or a storage state of an electrical/electronic device such as a secondary battery.

In this specification, the term abnormal state means a state where abnormal heating, ignition, and/or explosion occurs in an electrical/electronic device such as secondary batteries, or the risk of the abnormal heating, ignition, and/or explosion is increased. For example, a state where abnormal heating, ignition, or explosion occurs due to a short circuit phenomenon in a secondary battery, or a dangerous state where the possibility of the heating, ignition, or explosion is increased may be the abnormal state.

The present application relates to a current collector. The current collector may be an electrode current collector.

The electrode current collector of the present application may comprise a current collector body and a polymer layer formed on the current collector body. The current collector may be used for electrode formation. For example, an electrode formed using the electrode current collector may comprise the electrode current collector and an active material layer formed on the polymer layer of the current collector. Figure 1 is an exemplary cross-sectional diagram of a current collector including a current collector body (100) and a polymer layer (200), and Figure 2 is an exemplary cross-sectional diagram showing an electrode in which an active material layer (300) is formed on the polymer layer (200) of the current collector.

In the current collector or electrode, the current collector body (100) and the polymer layer (200), and the polymer layer (200) and the active material layer (300) may be in contact with each other as in the drawings. In some cases, other elements may exist between the current collector body (100) and the polymer layer (200) or between the polymer layer (200) and the active material layer (300). Also, in the drawings, the active material layer (300) is shown on only one side of the current collector body (100), but the active material layer (300) may also be present on both sides of the current collector body (100). In this case, the polymer layer (200) may also be present in two layers between each of the active material layers (300) present on both sides of the current collector body (100), and the current collector body (100), and may also be present in one layer between any one of the active material layers (300) present on both sides, and the current collector body (100).

The electrode formed by the electrode current collector of the present application may be a negative electrode (anode) or a positive electrode (cathode) applied to a secondary battery.

The polymer layer may be designed to exhibit a so-called PTC (positive temperature coefficient) effect. Such a polymer layer may exhibit a change in conductivity according to a change in temperature and/or applied voltage. Therefore, the polymer layer may variably control migration of charges through the electrode according to the temperature.

By applying such a polymer layer, the electrode having the current collector of the present application is applied to a secondary battery, and the like, so that it can exhibit excellent electrical characteristics, including low resistance, in a normal state, and secure stability through an increase in resistance, and the like in an abnormal state.

In order that the polymer layer is applied to the electrode to exhibit the above effects, the tendency of the PTC effect exhibited by the polymer layer must be controlled. The PTC effect is an effect in which the resistance increases in proportion to the temperature. In order that the electrode, to which the polymer layer having the PTC effect is applied, operates stably and secures stability in an abnormal state, an oxidation potential of the polymer layer, electrical characteristics before the resistance increases due to the PTC effect, and a time point when the resistance increases due to the PTC effect, and the like must be adjusted.

For example, if the polymer layer has a high oxidation potential compared to the electrode active material of the electrode, a decrease in the potential may occur upon repeated charging and discharging, and high-speed charging and discharging in the normal state. Also, if the resistance of the polymer layer is excessively high in the normal state, the migration of charges is restricted, thereby adversely affecting the operation of the secondary battery. In addition, if the temperature at which the PTC effect is expressed is within the temperature range of the normal state, the performance of the secondary battery cannot be expressed appropriately.

The polymer layer disclosed in this specification has the PTC effect, the time point of the PTC effect expression is controlled, and a stable oxidation potential and electrical characteristics are maintained before the expression of the PTC effect.

For expression of such a PTC effect, it is possible to introduce a specific conductive polymer into the polymer layer. For example, the electrical characteristics of the polymer layer are affected by the state of the conductive polymer. For example, when the conductive polymer is in a doping state, the polymer layer may exhibit low resistance, and when it is in a de-doping state, the polymer layer may exhibit high resistance. In the present application, the conductive polymer may be adjusted to exhibit a conversion between the doping and de-doping states at a necessary time point in response to temperature and/or voltage.

In the present application, as described below, by applying a conductive polymer having a relatively long hydrocarbon chain (long-chain hydrocarbon functional group), and controlling a drying or annealing temperature in a process of forming a polymer layer, an appropriate PTC effect (e.g., inducing the resistance increase of the polymer layer at

the desired temperature (temperature of the battery in an abnormal state)) can be secured.

In addition, by introducing a conductive material into the polymer layer and uniformly dispersing it therein, it is possible to appropriately maintain the oxidation potential or electrical characteristics as well.

For example, the current collector or the electrode comprising the same may exhibit low resistance at room temperature (about 25°C). For example, an AC impedance resistance at 25°C confirmed by the polymer layer, the current collector or the electrode may be below a certain level. Accordingly, stable operation or storage of the secondary battery may be possible in a normal state. The upper limit of the AC impedance resistance may be 40, 38, 36, 34, 32, 30, 28, 26, 24, 22, 20, 18, 16, 14, 12, 10, 9, 8.5, or 8 or so, and the lower limit thereof may also be 0, 2, 4, 6, 8, or 10 or so. The unit of the AC impedance resistance is Ω. The AC impedance resistance may be within a range of less than or equal to, or less than any upper limit selected from the above-listed upper limits; or within a range of more than or equal to, or more than any lower limit selected from the above-listed lower limits while being less than or equal to, or less than any upper limit selected from the above-listed upper limits. The AC impedance resistance is a resistance substantially confirmed in a coin cell to which the polymer layer, current collector layer, or electrode is applied, and the measurement method thereof follows a manner described in "5. AC impedance resistance measurement" of Example sections in this specification.

The polymer layer, the current collector, or the electrode comprising the same exhibits a low resistance as above at room temperature (about 25°C), and shows a rapid increase effect in resistance at a necessary time. For example, the polymer layer, current collector, or electrode may have ΔR within a certain range according to Equation 1 below.

[Equation 1]

$$\Delta R = 100 \times (R_{130} - R_{25})/R_{25}$$

In Equation 1, $R_{25}$ is the AC impedance resistance at 25°C, and $R_{130}$ is the AC impedance resistance at 130°C. The AC impedance resistances $R_{25}$ and $R_{130}$ are resistances substantially confirmed in the coin cell to which the polymer layer, current collector layer, or electrode is applied, and the measurement method thereof follows a manner described in "5. AC impedance resistance measurement" of Example sections in this specification.

The lower limit of ΔR in Equation 1 may be 200%, 500%, 700%, 800%, 900%, 950%, 1,000%, 1,100%, 1,150%, 1,200%, 1,500%, 1,700%, 1,800%, 1,900%, 2,000%, 2,100%, or 2,200% or so, and the upper limit thereof may be 10,000%, 7,000%, 5,000%, 4,000%, 3,000%, 2,500%, 2,400%, 2,300%, or 2,200% or so. The ΔR may be within a range of more than or equal to, or more than any lower limit selected from the above-listed lower limits; or within a range of more than or equal to, or more than any lower limit selected from the above-listed lower limits while being less than or equal to, or less than any upper limit selected from the above-listed upper limits.

The characteristics are exhibited by the above-described polymer layer.

Depending on the PTC effect of such a polymer layer, the polymer layer, the current collector, or the electrode may have a ΔC within a certain range according to Equation 2 below.

[Equation 2]

$$\Delta C = 100 \times (C_{25} - C_{130})/C_{25}$$

In Equation 2, $C_{25}$ is a discharge capacity at 25°C, and $C_{130}$ is a discharge capacity after storage at 130°C for 10 minutes. The discharge capacities $C_{25}$ and $C_{130}$ are discharge capacities substantially confirmed in a coin cell to which the polymer layer, current collector layer or electrode is applied, and the measurement method thereof follows the contents described in "7. Room temperature and high-temperature discharge capacity measurement" of Example sections in this specification.

The lower limit of the ΔC may be 20%, 25%, 30%, 35%, 40%, 45%, 50%, 55%, 60%, 65%, 70%, 75%, 80%, or 85% or so, and the upper limit thereof may be 500%, 450%, 400%, 350%, 300%, 250%, 200%, 150%, 100%, 95%, 90%, 85% or 80%. The above ΔC may be within a range of more than or equal to, or more than any lower limit selected from the above-listed lower limits; or within a range of more than or equal to, or more than any lower limit selected from the above-listed lower limits while being less than or equal to, or less than any upper limit selected from the above-listed upper limits.

The characteristics can be achieved through introduction of a polymer layer to be described below.

As the current collector body, one commonly used as a current collector body for a positive or negative electrode may be used without any special limitation.

If the current collector body has conductivity without causing chemical changes in applied devices such as

secondary batteries, the type, size, and shape thereof, and the like are not particularly limited. An example of a material that can be used as the current collector body may include copper, aluminum, stainless steel, nickel, titanium, or calcined carbon, and the like, or may be exemplified by a material, and the like in which the surface of copper, aluminum, or stainless steel is surface-treated with carbon, nickel, titanium, or silver, and the like. The current collector body may be in the form of a film, sheet, foil, net, porous body, foam, or non-woven fabric, and the like, which comprises the above material. In some cases, a known surface treatment may also be performed on the surface of the current collector body to improve adhesive force to other layers such as a polymer layer or an active material layer.

Such a current collector body may typically have a thickness within a range of 3μm to 500 μm, but is not limited thereto.

A polymer layer is present on one or both sides of the current collector body.

In this specification, the term polymer layer refers to a layer comprising a polymer. For example, the lower limit of the content of the polymer contained in the polymer layer may be 30 weight%, 35 weight%, 40 weight%, 45 weight%, 50 weight%, 55 weight%, 60 weight%, 65 weight%, 70 weight%, 75 weight%, 80 weight%, 85 weight%, 90 weight%, or 95 weight% or so, and the upper limit thereof may be 100 weight%, 95 weight%, 90 weight%, 85 weight%, 80 weight%, 75 weight%, 70 weight%, 65 weight%, 60 weight%, 55 weight%, or 50 weight% or so. The content is the content of the polymer based on the total weight of the polymer layer. The content may be within a range of more than or equal to, or more than any lower limit selected from the above-listed lower limits; or within a range of more than or equal to, or more than any lower limit selected from the above-listed lower limits while being less than or equal to, or less than any upper limit selected from the above-listed upper limits.

The polymer layer may not be the so-called active material layer of the electrode. Therefore, the content of the electrode active material in the polymer layer may be controlled. For example, the upper limit of the content of the electrode active material in the polymer layer may be 10 weight%, 9 weight%, 8 weight%, 7 weight%, 6 weight%, 5 weight%, 4 weight%, 3 weight%, 2 weight%, 1 weight%, 0.5 weight%, 0.1 weight%, 0.05 weight%, 0.01 weight%, 0.005 weight%, or 0.001 weight% or so, and the lower limit thereof may be 0 weight%. The content is the content of the polymer based on the total weight of the polymer layer. The content may be within a range of less than or equal to, or less than any upper limit selected from the above-listed upper limits; or within a range of more than or equal to, or more than any lower limit selected from the above-listed lower limits while being less than or equal to, or less than any upper limit selected from the above-listed upper limits. The specific type of the electrode active material is described below.

The polymer included in the polymer layer may be a conductive polymer. As is well known, a conductive polymer is a polymer that exhibits conductivity through conjugated systems of polymer chains and/or doping, and the like. In one example, the conductive polymer may be a polymer, the conductivity of which changes by doping and de-doping. In one example, the conductive polymer may be a conductive copolymer. The conductive copolymer is a type of conductive polymer and is distinguished from the conductive polymer in the form of a homopolymer in that it is a conductive polymer containing two or more monomer units.

The PTC effect exhibited by the polymer may be adjusted according to the purpose through use of a specific conductive polymer to be described below.

The oxidation potential of the conductive polymer or the polymer layer may be adjusted according to the purpose. In this specification, the oxidation potential is an oxidation potential measured based on lithium and lithium ions ($Li/Li^+$).

The lower limit of the oxidation potential may be 2V, 2.1V, 2.2V, 2.3V, 2.4V, 2.5V, 2.6V, 2.7V, 2.8V, 2.9V, 3V, 3.1V, 3.2V, 3.3V, 3.4V, 3.5V, 3.6V, or 3.7V or so, and the upper limit thereof may also be 6V, 5.5V, 5V, 4.9V, 4.8V, 4.7V, 4.6V, 4.5V, 4.4V, 4.3V, 4.2V, 4.1V, 4.0V, 3.9V, 3.8V, 3.7V, 3.6V, or 3.5V or so. The oxidation potential may be within a range of less than or equal to, or less than any upper limit selected from the above-listed upper limits; within a range of more than or equal to, or more than any lower limit selected from the above-listed lower limits; or within a range of more than or equal to, or more than any lower limit selected from the above-listed lower limits while being less than or equal to, or less than any upper limit selected from the above-listed upper limits. By adjusting the oxidation potential within such a range, it is possible to effectively secure the desired characteristics.

The conductive polymer may have a weight average molecular weight within a predetermined range. The lower limit of the weight average molecular weight of the conductive polymer may be 30,000, 35,000, 40,000, 45,000, 50,000, 55,000, or 60,000 or so, and the upper limit thereof may be 200,000, 150,000, 100,000, 95,000, 90,000, 85,000, 80,000, 75,000, 70,000, 65,000, 60,000, 55,000, or 50,000 or so. The unit of the weight average molecular weight is g/mol. The weight average molecular weight may be within a range of less than or equal to, or less than any upper limit selected from the above-listed upper limits; within a range of more than or equal to, or more than any lower limit selected from the above-listed lower limits; or within a range of more than or equal to, or more than any lower limit selected from the above-listed lower limits while being less than or equal to, or less than any upper limit selected from the above-listed upper limits. By using the conductive polymer having such a weight average molecular weight, it is possible to effectively form the polymer layer, current collector, and electrode with desired characteristics.

The molecular weight distribution, i.e., the ratio Mw/Mn of the weight average molecular weight Mw and the number average molecular weight Mn, of the conductive polymer may be within a predetermined range. The lower limit of

the molecular weight distribution may be 2, 2.5, 3, 3.5, or 4 or so, and the upper limit thereof may be 10, 9, 8, 7.5, 7, 6.5, 6, 5.5, 5, 4.5, 4, or 3.5 or so. The molecular weight distribution may be within a range of less than or equal to, or less than any upper limit selected from the above-listed upper limits; within a range of more than or equal to, or more than any lower limit selected from the above-listed lower limits; or within a range of more than or equal to, or more than any lower limit selected from the above-listed lower limits while being less than or equal to, or less than any upper limit selected from the above-listed upper limits. By using the conductive polymer having such a molecular weight distribution, it is possible to effectively form the polymer layer, current collector, and electrode with desired characteristics.

When the conductive polymer has the molecular weight characteristics, the control of the desired PTC effect can be efficiently performed. As described below, the PTC effect by the conductive polymer can be expressed as the de-doping efficiency is adjusted by vibration of a functional group (such as a long-chain hydrocarbon functional group to be described below) contained in the conductive polymer at an increased temperature. The type of vibration of such a functional group varies depending on the carbon number of the functional group, as described below, and varies depending on the size and size distribution of the polymer containing the functional group as well. The weight average molecular weight and molecular weight distribution reflect the size and size distribution, and the like. The weight average molecular weight and molecular weight distribution can be measured in the manner described in "2. GPC (Gel Permeation Chromatograph)" of Example sections in this specification.

The conductive polymer may be polythiophene.

In this specification, the term polythiophene means a polymer containing a thiophene monomer unit in a certain level or more. The lower limit of the ratio $100 \times M_T/M$ of the mole number $M_T$ of the thiophene monomer unit to the mole number M of all monomer units included in the polythiophene may be 50 mol%, 55 mol%, 60 mol%, 65 mol%, 70 mol%, 75 mol%, 80 mol%, 85 mol%, or 90 mol% or so, and the upper limit thereof may be 100 mol%, 95 mol%, or 90 mol% or so. The range may be within a range of more than or equal to, or more than any lower limit selected from the above-listed lower limits; or within a range of more than or equal to, or more than any lower limit selected from the above-listed lower limits while being less than or equal to, or less than any upper limit selected from the above-listed upper limits.

In this specification, the monomer unit means a form in which a monomer is polymerized and included in a polymer, and the thiophene monomer is a thiophene-based monomer, which means a monomer including a thiophene skeleton.

The conductive polymer may contain a long-chain hydrocarbon functional group or a monomer unit having the long-chain hydrocarbon functional group (hereinafter, referred to as unit A). The conductive polymer may be polythiophene. In this case, the monomer having the long-chain hydrocarbon functional group may be a thiophene monomer.

In this specification, the term long-chain hydrocarbon functional group means a monovalent hydrocarbon group having carbon atoms in a certain level or more, or a monovalent functional group containing the hydrocarbon structure having carbon atoms in a certain level or more.

For example, the lower limit of the carbon number present in the long-chain hydrocarbon functional group (i.e., the carbon number in the monovalent hydrocarbon group or hydrocarbon structure) may be 3, 4, 5, 6, 7, 8, 9, 10, 11, or 12 or so, and the upper limit thereof may be 30, 29, 28, 27, 26, 25, 24, 23, 22, 21, 20, 19, 18, 17, 16, 15, 14, 13, 12, 11, 10, 9, 8, 7, 6, 5, or 4 or so. The carbon number may be within a range of more than or equal to, or more than any lower limit selected from the above-listed lower limits; or within a range of more than or equal to, or more than any lower limit selected from the above-listed lower limits while being less than or equal to, or less than any upper limit selected from the above-listed upper limits.

The carbon number may be the carbon number of a linear hydrocarbon chain present in the long-chain hydrocarbon functional group. That is, the monovalent hydrocarbon group or hydrocarbon structure present in the long-chain hydrocarbon functional group may have a linear structure or a branched structure, where even in the case of the branched structure, the carbon number constituting the longest linear chain in the relevant branched structure may be within the above range. For example, if the branched structure is a 2-ethylhexyl group, the carbon number constituting the longest linear chain is 6.

An example of the long-chain hydrocarbon functional group may be exemplified by one or more selected from the group consisting of an alkyl group, an alkenyl group, an alkynyl group, an alkoxy group, an alkylcarbonyl group, and an alkylcarbonyloxy. In a suitable example, the long-chain hydrocarbon functional group may be an alkyl group and/or an alkoxy group.

The carbon number in the alkyl group, alkenyl group and alkynyl group, and the alkyl group present in the alkoxy group, alkylcarbonyl group and alkylcarbonyloxy may be in the range of the carbon number present in the long-chain hydrocarbon functional group (i.e., the carbon number in the monovalent hydrocarbon group or hydrocarbon structure).

For example, the alkyl group, alkenyl group and alkynyl group, and the alkyl group present in the alkoxy group, alkylcarbonyl group and alkylcarbonyloxy may have a linear or branched structure, where in the case of the branched chain, the carbon number constituting the longest linear chain in the relevant branched structure may be within the above range.

The alkyl group, alkenyl group, alkynyl group, alkoxy group, alkylcarbonyl group, or alkylcarbonyloxy, which is a

long-chain hydrocarbon functional group, may also be optionally substituted with one or more substituents.

Such a long-chain hydrocarbon functional group is a functional group capable of imparting appropriate mobility to the monomer during the polymerization process of the conductive polymer or the conductive polymer itself. The monomer containing such a long-chain hydrocarbon functional group imparts appropriate mobility to a monomer mixture, and diffuses within the monomer mixture to enable polymerization to occur with excellent efficiency. Also, the conductive polymer having the long-chain hydrocarbon functional group can enable a polymer layer to be formed stably and uniformly between the current collector and the active material layer through appropriate mobility.

The long-chain hydrocarbon functional group is appropriately oriented during the drying or annealing process applied in the process of forming the polymer layer, whereby it can also enable control of the PTC effect suitable for the polymer. The long-chain hydrocarbon functional group expresses enhanced vibrational energy at an increased temperature, whereby the efficiency of de-doping of anions bound to the polymer can be adjusted. This de-doping induces an increase in resistance. The de-doping efficiency can be controlled by the length and/or amount of the long-chain hydrocarbon functional group. For example, under the same temperature, the vibrational energy of a relatively long chain is more than the vibrational energy of a relatively short chain, and accordingly, the desired PTC effect can be set through control of the type, length, and/or ratio of the long-chain hydrocarbon functional group.

For example, to appropriately implement the effect, the ratio $100xM_L/M$ of the mole number $M_L$ of the monomer unit (unit A) having the long-chain hydrocarbon functional group to the mole number M of all monomer units of the conductive polymer may be adjusted. For example, the lower limit of the ratio $100\times M_L/M$ may be 50 mol%, 55 mol%, 60 mol%, 65 mol%, 70 mol%, 75 mol%, 80 mol%, 85 mol%, 90 mol%, or 95 mol% or so, and the upper limit thereof may be 99 mol%, 98 mol%, 96 mol%, 95 mol%, 94 mol%, 93 mol%, 92 mol%, 91 mol%, or 90 mol% or so. The ratio may be within a range of more than or equal to, or more than any lower limit selected from the above-listed lower limits; or within a range of more than or equal to, or more than any lower limit selected from the above-listed lower limits while being less than or equal to, or less than any upper limit selected from the above-listed upper limits. The closer the upper and lower limits of the ratio $100\times M_L/M$ are each to the ratio (approximately 90 mol%) presented in Examples of this specification, the more effectively the desired effect can be exerted.

The conductive polymer may contain first and second hydrocarbon functional groups having different carbon numbers as the long-chain hydrocarbon functional group.

The first hydrocarbon functional group is a functional group having a relatively large carbon number among the long-chain hydrocarbon functional groups. The lower limit of the carbon number of the first hydrocarbon functional group may be 10, 11, or 12 or so, and the upper limit thereof may be 20, 19, 18, 17, 16, 15, 14, 13, 12, 11, or 10 or so. The carbon number of the first hydrocarbon functional group may be within a range of more than or equal to, or more than any lower limit selected from the above-listed lower limits; or within a range of more than or equal to, or more than any lower limit selected from the above-listed lower limits while being less than or equal to, or less than any upper limit selected from the above-listed upper limits. The closer the lower limit of the carbon number of the first hydrocarbon functional group is to the value (12) presented in Examples of this specification, the more effectively the desired effect can be exerted.

Such a first hydrocarbon functional group exhibits enhanced vibrational energy at an increased temperature, whereby it is possible to control the de-doping efficiency of the conductive polymer. The start temperature (onset point) of the de-doping of the conductive polymer can be controlled through the content of the first hydrocarbon functional group or the combination of a second hydrocarbon functional group to be described below.

The second hydrocarbon functional group is a functional group having a relatively small carbon number among the long-chain hydrocarbon functional groups. The lower limit of the carbon number of the second hydrocarbon functional group may be 3, 4, 5, 6, 7, or 8 or so, and the upper limit thereof may be 9, 8, 7, or 6 or so. The carbon number of the second hydrocarbon functional group may be within a range of less than or equal to, or less than any upper limit selected from the above-listed upper limits; or within a range of more than or equal to, or more than any lower limit selected from the above-listed lower limits while being less than or equal to, or less than any upper limit selected from the above-listed upper limits. The closer the lower limit and the upper limit of the carbon number of the second hydrocarbon functional group are each to the values (6) presented in Examples of this specification, the more effectively the desired effect can be exerted.

Such a second hydrocarbon functional group dilutes the effect by the vibrational energy exhibited by the first hydrocarbon functional group at a predetermined temperature. Therefore, the first hydrocarbon functional group has the effect of lowering the onset point of the PTC effect, whereas the second hydrocarbon functional group has the effect of diluting such a first hydrocarbon functional group.

The carbon number of each of the first and second hydrocarbon functional groups may be the carbon number of a linear hydrocarbon chain present in the hydrocarbon functional group. For example, the first and second hydrocarbon functional groups may each independently be one or more selected from the group consisting of an alkyl group, an alkenyl group, an alkynyl group, an alkoxy group, an alkylcarbonyl group, and an alkylcarbonyloxy, and may be, in a suitable example, an alkyl group and/or an alkoxy group, where the carbon number may be the carbon number of the alkyl group, the alkenyl group, and the alkynyl group, and the alkyl group present in the alkoxy group, the alkylcarbonyl group, and the alkylcarbonyloxy.

The alkyl group, the alkenyl group, and the alkynyl group, and the alkyl group present in the alkoxy group, the alkylcarbonyl group, and the alkylcarbonyloxy may have a linear or branched structure, where in the case of the linear chain, the total carbon number may be within the above range, and in the case of the branched chain, the carbon number constituting the longest linear chain in the relevant branched chain structure may be within the above range.

As described above, the carbon number of the long-chain hydrocarbon functional group is related to vibration characteristics due to the applied heat energy, and if the carbon number changes, the vibration characteristics also change, and the vibration characteristics are also linked to the PTC characteristics of the conductive polymer. In the conductive polymer of the present application, the first hydrocarbon functional group can mainly play a role in adjusting the temperature at which the PTC effect is expressed, that is, the temperature at which the resistance increase occurs, and the second hydrocarbon functional group can play a role in suppressing the increase in resistance at a relatively low temperature.

In the conductive polymer, the ratio $100\times(M_1+M_2)/M$ of the sum $M_1+M_2$ of the mole number $M_1$ of the monomer unit having the first hydrocarbon functional group and the mole number $M_2$ of the monomer unit having the second hydrocarbon functional group to the mole number M of all monomer units of the conductive polymer may be adjusted within the same range as the ratio $100\times M_L/M$ of the unit A as described above.

The lower limit of the ratio $M_2/M_1$ of the mole number $M_2$ of the monomer unit having the second hydrocarbon functional group to the mole number $M_1$ of the monomer unit having the first hydrocarbon functional group in the conductive polymer may be 0.01, 0.05, 0.1, 0.5, 1, 1.5, or 2 or so, and the upper limit thereof may be 100, 95, 90, 85, 80, 75, 70, 65, 60, 55, 50, 45, 40, 35, 30, 25, 20, 15, 10, 9, 8, 7, 6, 5, 4, 3, 2, 1, or 0.7 or so. The above ratio may be less than or equal to, or less than any upper limit selected from the above-listed upper limits, may be more than or equal to, or more than any lower limit selected from the above-listed lower limits, or may also have a range between less than or equal to, or less than any upper limit selected from the above-listed upper limits and simultaneously more than or equal to, or more than any lower limit selected from the above-listed lower limits. The closer the lower limit and the upper limit of the ratio $M_2/M_1$ are each to the ratio (about 0.5) presented in Examples of this specification, the more effectively the desired effect can be exerted.

Under such a ratio, the conductive polymer or the polymer layer exhibits an appropriate PTC (Positive Temperature Coefficient) effect, and exhibits stable electrical characteristics at a temperature in a normal state, and the surface characteristics of the polymer layer are adjusted, whereby it is possible to ensure excellent adhesive force in the electrode or current collector.

The conductive polymer may contain a polar functional group or a monomer unit having the polar functional group (hereinafter, may be referred to as a unit B) together with the long-chain hydrocarbon functional group or the unit A. The monomer having the polar functional group may be a thiophene monomer.

In this specification, the term polar functional group is a functional group containing one or two or more polar atoms, for example, oxygen and/or nitrogen. An example of such a functional group includes a carboxyl group, a hydroxy group, an amino group, a cyano group, a nitro group, an ether group, or a functional group of Formula 3 below, but is not limited thereto. In one example, as the polar functional group, a functional group of Formula 3 below may be applied.

[Formula 3]

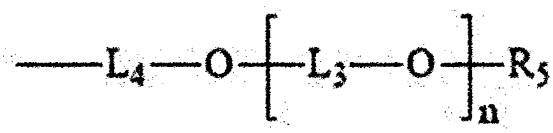

In Formula 3, $L_4$ is a single bond, an alkylene group or an alkylidene group, $L_3$ is an alkylene group or an alkylidene group, $R_5$ is hydrogen or an alkyl group, and n is an arbitrary number.

In Formula 3, the matter that $L_4$ is a single bond means a form in which $L_4$ does not exist, and the oxygen atom between $L_4$ and $L_3$ is directly connected to a second monomer.

In one example, the alkyl group of $R_5$ in Formula 3 may be an alkyl group with 1 to 20 carbon atoms, 1 to 16 carbon atoms, 1 to 12 carbon atoms, 1 to 8 carbon atoms, or 1 to 4 carbon atoms, or may be a methyl group or an ethyl group. The alkyl group may be linear, branched, or cyclic, and may be suitably linear or branched. The alkyl group may be optionally substituted with one or more substituents.

In this specification, the term alkylene group means a divalent functional group formed by removing hydrogen atoms from two different carbon atoms, respectively, in an alkane, and the term alkylidene group means a divalent functional group formed by removing two hydrogen atoms from one carbon atom in an alkane.

In one example, the alkylene groups of $L_3$ and $L_4$ in Formula 3 may each be an alkylene group with 2 to 20 carbon atoms, 2 to 16 carbon atoms, 2 to 12 carbon atoms, 2 to 8 carbon atoms, or 2 to 4 carbon atoms, or may be an ethylene group or a propylene group. The alkylene group may be linear, branched, or cyclic, and may be suitably linear or branched.

The alkylene group may be optionally substituted with one or more substituents.

In one example, the alkylidene groups of $L_3$ and $L_4$ in Formula 3 may each be an alkylidene group with 1 to 20 carbon atoms, 1 to 16 carbon atoms, 1 to 12 carbon atoms, 1 to 8 carbon atoms, or 1 to 4 carbon atoms, or may be a methylidene group, an ethylidene group or a propylidene group. The alkylidene group may be linear, branched, or cyclic, and may be suitably linear or branched. The alkylidene group may be optionally substituted with one or more substituents.

In Formula 3, the lower limit of n may be 1, 2, 3 or 4, and the upper limit thereof may be 10, 9, 8, 7, 6, 5, 4, or 3 or so. The n may be within a range of more than or equal to, or more than any lower limit selected from the above-listed lower limits while being less than or equal to, or less than any upper limit selected from the above-listed upper limits.

Through the application of the polar functional group, the polymer layer may be bonded to other layers to have an appropriate bonding force, and the desired protective function may be efficiently achieved by uniformly forming the conductive copolymer layer. In addition, the polar functional group may also play a role in suppressing the PTC effect from appearing at a relatively low temperature.

The mole numbers of the polar functional group and the long-chain hydrocarbon functional group in the conductive polymer may be controlled to ensure an appropriate effect.

For example, the lower limit of the ratio $M_L/M_P$ of the mole number $M_L$ of the long-chain hydrocarbon functional group to the mole number $M_P$ of the polar functional group in the conductive polymer may be 1, 5, 7, 8, 9, 10, 15, 16, 17, 18, or 19 or so, and the upper limit thereof may be 500, 450, 400, 350, 300, 250, 200, 150, 100, 95, 90, 85, 80, 75, 70, 65, 60, 55, 50, 45, 40, 35, 30, 25, 20, 15, or 10 or so. The ratio $M_L/M_P$ may be within a range of less than or equal to, or less than any upper limit selected from the above-listed upper limits; within a range of more than or equal to, or more than any lower limit selected from the above-listed lower limits; or within a range of more than or equal to, or more than any lower limit selected from the above-listed lower limits while being less than or equal to, or less than any upper limit selected from the above-listed upper limits. The closer the upper and lower limits of the ratio $M_L/M_P$ are each to the ratio (about 9) presented in Examples of this specification, the more effectively the desired effect can be exerted.

The ratio $M_A/M_B$ of the mole number $M_A$ of the unit A to the mole number $M_B$ of the unit B in the conductive polymer may be adjusted within the same range as the ratio $M_L/M_P$. In this instance, the mole number $M_L$ becomes the mole number $M_A$, and the mole number $M_P$ becomes the mole number $M_B$.

The lower limit of the ratio $100\times(M_A+M_B)/M$ of the sum mole number $M_A+M_B$ of the units A and B to the total mole number M of all monomer units of the conductive polymer may be 50 mol%, 55 mol%, 60 mol%, 65 mol%, 70 mol%, 75 mol%, 80 mol%, 85 mol%, 90 mol%, or 95 mol% or so, and the upper limit thereof may be 100 mol%, 95 mol%, or 90 mol% or so. The ratio may be within a range of more than or equal to, or more than any lower limit selected from the above-listed lower limits; or within a range of more than or equal to, or more than any lower limit selected from the above-listed lower limits while being less than or equal to, or less than any upper limit selected from the above-listed upper limits.

The specific structure of the monomer included in the conductive polymer is not particularly limited if it is a thiophene monomer having the long-chain hydrocarbon functional group and/or polar functional group as described above.

For example, the conductive polymer may contain a monomer unit of Formula 1 below as the thiophene monomer unit.

[Formula 1]

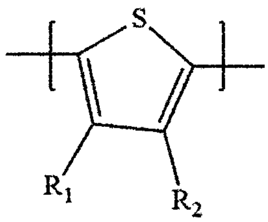

In Formula 1, $R_1$ and $R_2$ are each independently hydrogen, the polar functional group, or the long-chain hydrocarbon functional group, but at least one of $R_1$ and $R_2$ may be the polar functional group or the long-chain hydrocarbon functional group.

In another example, $R_1$ and $R_2$ above in Formula 1 may be connected to each other to form a divalent functional group of Formula 2 below.

[Formula 2]

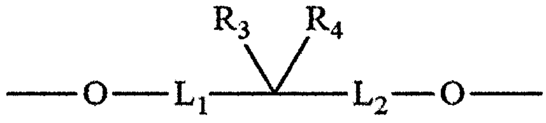

In Formula 2, each oxygen atom may be bonded to the carbon atom to which $R_1$ is connected and the carbon atom to which $R_2$ is connected in Formula 1.

In Formula 2, $L_1$ and $L_2$ are each independently a single bond, an alkylene group, or an alkylidene group, and $R_3$ and $R_4$ are each independently hydrogen, a polar functional group, or a long-chain hydrocarbon functional group, but at least one of $R_3$ and $R_4$ is a polar functional group or a long-chain hydrocarbon functional group.

The specific types of the polar functional group and the long-chain hydrocarbon functional group in Formulas 1 and 2 are as described above. As described above, as the long-chain hydrocarbon functional group, the first and second hydrocarbon functional groups may be applied together. In such a case, a monomer unit having the first hydrocarbon functional group and a monomer unit having the second hydrocarbon functional group may be used within the scope of Formula 1, and the ratio between them, and the like may also follow the above-described contents.

The meaning that $L_1$ or $L_2$ in Formula 2 is a single bond is the same as that of $L_4$ in Formula 3. The specific types of the alkylene group and the alkylidene group of $L_1$ and $L_2$ in Formula 2 are the same as the alkylene group and the alkylidene group in Formula 3.

The lower limit of the molar ratio of the monomer unit of Formula 1 relative to the mole number of all monomer units included in the conductive polymer may be 50 mol%, 55 mol%, 60 mol%, 65 mol%, 70 mol%, 75 mol%, 80 mol%, 85 mol%, or 90 mol% or so, and the upper limit thereof may be 100 mol%, 95 mol%, or 90 mol% or so. The range may be within a range of more than or equal to, or more than any lower limit selected from the above-listed lower limits; or within a range of more than or equal to, or more than any lower limit selected from the above-listed lower limits while being less than or equal to, or less than any upper limit selected from the above-listed upper limits.

The conductive polymer may simultaneously include a monomer unit of Formula 4 below and a monomer unit of Formula 5 below as monomer units. The monomer unit of Formula 4 below is an example of the above-described unit A, and the monomer unit of Formula 5 below is an example of the above-described unit B.

[Formula 4]

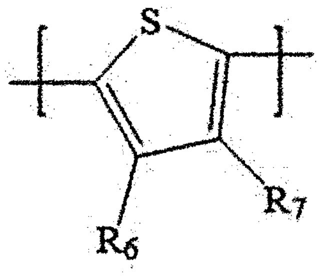

In Formula 4, $R_6$ and $R_7$ are each independently hydrogen or the long-chain hydrocarbon functional group, and at least one of $R_6$ and $R_7$ is the long-chain hydrocarbon functional group.

In another example, $R_6$ and $R_7$ of Formula 4 may be connected to each other to form a divalent functional group of Formula 6 below.

[Formula 6]

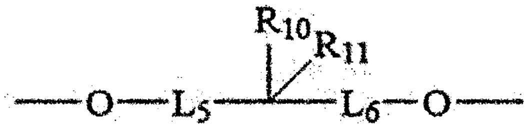

In Formula 6, $L_5$ and $L_6$ are each independently a single bond, an alkylene group, or an alkylidene group, and $R_{10}$ and $R_{11}$ are each independently hydrogen or a long-chain hydrocarbon functional group, but at least one of $R_{10}$ and $R_{11}$ is a long-chain hydrocarbon functional group.

The specific types of the long-chain hydrocarbon functional groups in Formulas 4 and 6 are as described above. As described above, as the long-chain hydrocarbon functional group, the first and second hydrocarbon functional groups

may be applied together. In such a case, a monomer unit having the first hydrocarbon functional group and a monomer unit having the second hydrocarbon functional group may be used within the scope of Formula 4, and the ratio between them, and the like may also follow the above-described contents.

In Formula 6, the meaning of the single bond, and the specific types of the alkylene group and the alkylidene group are the same as in Formula 3.

[Formula 5]

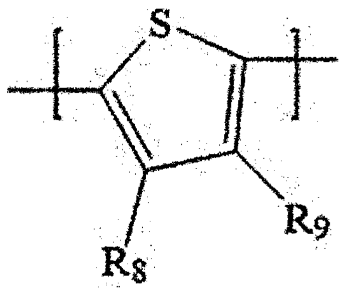

In Formula 5, $R_8$ and $R_9$ are each independently hydrogen or the polar functional group, but at least one of $R_8$ and $R_9$ may be the polar functional group. In another example, $R_8$ and $R_9$ of Formula 5 may be connected to each other to form a divalent functional group of Formula 7 below.

[Formula 7]

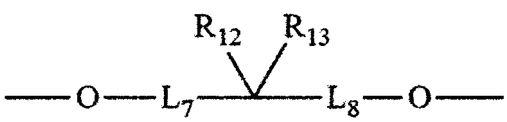

In Formula 7, $L_7$ and $L_8$ are each independently a single bond, an alkylene group, or an alkylidene group, and $R_{12}$ and $R_{13}$ are each independently hydrogen or the polar functional group, but at least one of $R_{12}$ and $R_{13}$ may be the polar functional group.

The specific types of the polar functional groups in Formulas 5 and 7 are as described above. The meaning of the single bond in Formula 7, and the specific types of the alkylene group and the alkylidene group are the same as those in Formula 3.

For example, the ratio $100\times M_4/M$ of the mole number $M_4$ of the monomer unit of Formula 4 above to the mole number M of all monomer units of the conductive polymer may be adjusted within the same range as that of the ratio $100\times M_L/M$.

For example, the ratio $M_4/M_5$ of the mole number $M_4$ of the monomer unit of Formula 4 above to the mole number $M_5$ of the monomer unit of Formula 5 above in the conductive polymer may be adjusted within the same range as that of the ML/MP.

In the conductive polymer, the lower limit of the ratio $100\times(M_4+M_5)/M$ of the sum mole number $M_4+M_5$ of the monomer units of Formulas 4 and 5 above to the mole number M of all monomer units included in the polymer may be 50 mol%, 55 mol%, 60 mol%, 65 mol%, 70 mol%, 75 mol%, 80 mol%, 85 mol%, 90 mol%, or 95 mol% or so, and the upper limit thereof may be 100 mol%, 95 mol%, or 90 mol% or so. The ratio may be within a range of more than or equal to, or more than any lower limit selected from the above-listed lower limits; or within a range of less than or equal to, or less than any upper limit selected from the above-listed upper limits; or within a range of more than or equal to, or more than any lower limit selected from the above-listed lower limits while being less than or equal to, or less than any upper limit selected from the above-listed upper limits.

The conductive polymer may further contain other monomer units if it contains the above-described units in the above ratios.

The lower limit of the content of the conductive polymer in the polymer layer may be 40%, 45%, 50%, 55%, 60%, 65%, 70%, 75%, 80%, 85%, 90%, or 95% or so, and the upper limit thereof may be 99%, 95%, 90%, 85%, 80%, 75%, 70%, 65%, 60%, 55%, 50%, 45%, 40%, or 35% or so. The ratio may be within a range of more than or equal to, or more than any lower limit selected from the above-listed lower limits; or within a range of less than or equal to, or less than any upper limit selected from the above-listed upper limits; or within a range of more than or equal to, or more than any lower limit selected from the above-listed lower limits while being less than or equal to, or less than any upper limit selected from the above-listed upper limits.

The polymer layer includes the conductive polymer, and accordingly, it can exhibit the above-described properties. The polymer layer may also include any additional components if it includes the conductive polymer.

For example, the polymer layer may further comprise a conductive material (conductive particles) together with the conductive polymer. Through addition of such a material, it is possible to adjust the oxidation potential of the polymer, and it is possible to secure excellent electrical characteristics. As the conductive material, a material having appropriate conductivity may be used, and for example, as the conductive material, one, or two or more selected from carbon particles, carbon fibers, graphene, graphite, carbon black, and carbon nanotubes may be used.

As the conductive material (conductive particles), an appropriate type may be selected and used from the above-described types. There is no special limitation on the shape of the conductive particle, and for example, it may have a form such as a spherical, irregular, plate-like, or fibrous shape, but is not limited thereto.

For an appropriate effect, it is necessary to control the size of the conductive material. For example, the lower limit of the average size of the conductive material (conductive particles) may be 1 nm, 5 nm, 15 nm, 20 nm, 25 nm, or 30 nm or so, and the upper limit thereof may be 100 nm, 95 nm, 90 nm, 85 nm, 80 nm, 75 nm, 70 nm, 65 nm, 60 nm, 55 nm, 50 nm, 45 nm, 40 nm, 35 nm, or 30 nm or so. The average size may be within a range of less than or equal to, or less than any upper limit selected from the above-listed upper limits; or within a range of more than or equal to, or more than any lower limit selected from the above-listed lower limits while being less than or equal to, or less than any upper limit selected from the above-listed upper limits. The average size of the conductive particles is measured in the manner described in "8. Measurement of average particle diameter of conductive particles" of Example sections in this specification. The closer the upper and lower limits of the average size of the conductive particles are each to the average size (about 30 nm) of the conductive particles used in the examples, the more effectively the desired effect can be exerted.

If the conductive material (conductive particles) is applied too large, the effect of the polymer layer (particularly, the PTC effect that causes an increase in resistance) can be inhibited.

If necessary, the conductive material may also be surface-treated considering dispersibility and coatability. Particularly, through such surface treatment, the coatability can be stably secured and a uniform polymer layer can be formed.

In such a case, a surface-treating agent having appropriate compatibility with the conductive polymer may be used as the surface-treating agent. For example, the conductive material may be surface-treated with a polyphenol-based compound as the surface-treating agent. The polyphenol-based compound means a compound comprising a structure containing two or more hydroxy groups substituted and connected to benzene. Such a compound may be exemplified by a so-called catechol-based compound (i.e., catechol or a compound containing the relevant structure), and an example thereof includes dopamine, polydopamine, 3,4-dihydroxy phenyl alanine, norepinephrine, tannic acid, humic acid and/or lignin, and the like, but is not limited thereto.

A method of surface-treating a conductive material with the surface-treating agent is not limited, and for example, a method of mixing the conductive material and the surface-treating agent in an appropriate solvent, and the like, or a method of synthesizing or polymerizing the surface-treating agent on the surface of the conductive material may be applied.

The content of the conductive material may be adjusted in consideration of the desired oxidation potential. In general, if the content of the conductive material in the polymer layer increases, the oxidation potential of the polymer layer decreases. Therefore, the content of the conductive material may be adjusted by considering the oxidation potential of the electrode active material and accordingly, the required oxidation potential of the polymer layer. For example, the lower limit of the content of the conductive material in the polymer layer relative to 100 parts by weight of the conductive polymer may be 0.5 parts by weight, 1 part by weight, 5 parts by weight, 10 parts by weight, 15 parts by weight, 20 parts by weight, 30 parts by weight, 40 parts by weight, 50 parts by weight, 60 parts by weight, 70 parts by weight, 80 parts by weight, 90 parts by weight, or 100 parts by weight or so, and the upper limit thereof may be 150 parts by weight, 145 parts by weight, 140 parts by weight, 135 parts by weight, 130 parts by weight, 125 parts by weight, 120 parts by weight, 115 parts by weight, 110 parts by weight, 105 parts by weight, 100 parts by weight, 50 parts by weight, 48 parts by weight, 46 parts by weight, 44 parts by weight, 42 parts by weight, 40 parts by weight, 38 parts by weight, 36 parts by weight, 34 parts by weight, 32 parts by weight, 30 parts by weight, 28 parts by weight, 26 parts by weight, 24 parts by weight, 22 parts by weight, 20 parts by weight, 18 parts by weight, 16 parts by weight, 14 parts by weight, 12 parts by weight, 10 parts by weight, 5 parts by weight, or 1 part by weight or so. The content may be within a range of less than or equal to, or less than any upper limit selected from the above-listed upper limits; within a range of more than or equal to, or more than any lower limit selected from the above-listed lower limits; or within a range of more than or equal to, or more than any lower limit selected from the above-listed lower limits while being less than or equal to, or less than any upper limit selected from the above-listed upper limits.

Under such a ratio, the conductive material appropriately interacts with the conductive polymer, so that a polymer layer with a desired shape can be effectively formed.

The thickness of the polymer layer may be appropriately controlled depending on the purpose. For example, the lower limit of the thickness may be 10 nm, 50 nm, 100 nm, 150 nm, 200 nm, 250 nm, 300 nm, 350 nm, 400 nm, 450 nm, or 500 nm or so, and the upper limit thereof may be 2 μm, 1.5 μm, 1 μm, 950 nm, 900 nm, 850 nm, 800 nm, 750 nm, 700 nm,

650 nm, 600 nm, 550 nm, 500 nm, 450 nm, 400 nm, 350 nm, or 300 nm or so. The thickness may be less than or equal to, or less than any upper limit selected from the above-listed upper limits, may be more than or equal to, or more than any lower limit selected from the above-listed lower limits, or may also have a range between less than or equal to, or less than any upper limit selected from the above-listed upper limits and simultaneously more than or equal to, or more than any lower limit selected from the above-listed lower limits.

The present application also relates to a method for manufacturing the electrode current collector. The manufacturing method comprises a process for controlling the properties of the conductive polymer for a desired PTC effect, and the like.

The manufacturing method may comprise a step of forming a polymer layer using a polymer solution containing the conductive polymer and, if necessary, the conductive material.

In the step, the detailed descriptions of the conductive polymer and the conductive material as used are as described above, and the coating liquid can be prepared by dissolving the polymer and/or the conductive material in an appropriate solvent. At this time, if the solvent can dissolve at least part of the conductive polymer, the type thereof is not particularly limited.

In the step, the lower limit of the concentration of the conductive polymer present in the polymer solution may be 0.5 weight%, 1 weight%, 1.5 weight%, 2 weight%, 2.5 weight%, or 3 weight% or so, and the upper limit thereof may be 20 weight%, 18 weight%, 16 weight%, 14 weight%, 12 weight%, 10 weight%, 9 weight%, 8 weight%, 7 weight%, 6 weight%, 5 weight%, 4 weight%, or 3 weight% or so. The ratio may be within a range of more than or equal to, or more than any lower limit selected from the above-listed lower limits; or within a range of less than or equal to, or less than any upper limit selected from the above-listed upper limits; or within a range of more than or equal to, or more than any lower limit selected from the above-listed lower limits while being less than or equal to, or less than any upper limit selected from the above-listed upper limits. Such a concentration may be changed as needed.

The conductive polymer can be formed by a known polymerization method. For example, a method using an oxidation polymerization reaction or a method using a radical reaction are representatively known as a method for producing polythiophene.

The polymer solution is used to form a polymer layer on a current collector. This process usually comprises a step of coating the polymer solution on a current collector and a step of heat-treating the coated coating solution. In this specification, the polymer layer formed on the current collector before the heat treatment may be called a precursor. The crystallinity of the conductive polymer or the orientation of the long-chain hydrocarbon functional group may also be controlled by the conditions of the heat treatment.

For example, the heat treatment step may be performed in two steps. For example, the heat treatment step may comprise a first step of primarily heat-treating the precursor at a temperature $T_1$; and a second step of secondarily heat-treating the precursor at a temperature $T_2$ following the first step.

The conditions of the first and second steps may be adjusted for achievement of the desired orientation or alignment of the functional groups in the conductive polymer and the dispersion state of the conductive material.

For example, the temperature $T_1$ of the primary heat treatment may be adjusted within a predetermined range. For example, the lower limit of the temperature range to which the temperature $T_1$ belongs may be 50°C, 55°C, 60°C, 65°C, 70°C, 75°C, 80°C, 85°C, 90°C, 95°C, 100°C, 105°C, 110°C, 115°C, 120°C, 125°C, 130°C, 135°C, or 140°C or so, and the upper limit thereof may be 300°C, 290°C, 280°C, 270°C, 260°C, 250°C, 240°C, 230°C, 220°C, 210°C, 200°C, 190°C, 180°C, 170°C, 160°C, 150°C, or 140°C or so. The temperature range may be within a range of more than or equal to, or more than any lower limit selected from the above-listed lower limits; or within a range of less than or equal to, or less than any upper limit selected from the above-listed upper limits while being more than or equal to, or more than any lower limit selected from the above-listed lower limits.

In the heat treatment step, the temperature $T_1$ of the primary heat treatment and the temperature $T_2$ of the secondary heat treatment may be adjusted. For example, the lower limit of the ratio $T_1/T_2$ of the temperature ranges $T_1$ and $T_2$ may be 0.1, 0.2, 0.3, 0.4, 0.5, 0.6, 0.7, 0.8, 0.9, 1, 1.1, or 1.2 or so, and the upper limit thereof may be 5, 4.5, 4, 3.5, 3, 2.5, 2, 1.9, 1.8, 1.7, 1.6, 1.5, 1.4, 1.3, 1.2, or 1.1 or so. The ratio may be within a range of more than or equal to, or more than any lower limit selected from the above-listed lower limits; or within a range of less than or equal to, or less than any upper limit selected from the above-listed upper limits; or within a range of less than or equal to, or less than any upper limit selected from the above-listed upper limits while being more than or equal to, or more than any lower limit selected from the above-listed lower limits.

In one example, in the heat treatment step, the temperature $T_1$ of the primary heat treatment may be adjusted to be higher than the temperature $T_2$ of the secondary heat treatment.

The ratio $M_2/M_1$ of the heat treatment time $M_1$ in the primary heat treatment and the heat treatment time $M_2$ in the secondary heat treatment may be further adjusted. For example, the lower limit of the ratio $M_2/M_1$ may be 1, 2, 3, 4, 5, 6, 7, 8, 9, 10, 11, 12, 13, 14, or 15 or so, and the upper limit thereof may be 1,000, 950, 900, 850, 800, 750, 700, 650, 600, 550, 500, 450, 400, 350, 300, 290, 280, 270, 200, 150, 100, 90, 80, 70, 60, 50, 40, 30, or 20 or so. The ratio $M_2/M_1$ may be within a range of more than or equal to, or more than any lower limit selected from the above-listed lower limits; or within a range of

less than or equal to, or less than any upper limit selected from the above-listed upper limits; or within a range of less than or equal to, or less than any upper limit selected from the above-listed upper limits while being more than or equal to, or more than any lower limit selected from the above-listed lower limits.

The lower limit of the secondary heat treatment time $M_2$ may be 0.1 hours, 0.2 hours, 0.3 hours, 0.4 hours, 0.5 hours, 0.6 hours, 0.7 hours, 0.8 hours, 0.9 hours, 1 hour, 2 hours, 3 hours, 4 hours, 5 hours, 6 hours, 7 hours, 8 hours, 9 hours, 10 hours, 11 hours, 12 hours, 13 hours, 14 hours, 15 hours, 16 hours, 17 hours, or 18 hours or so, and the upper limit thereof may be 50 hours, 48 hours, 46 hours, 44 hours, 42 hours, 40 hours, 38 hours, 36 hours, 34 hours, 32 hours, 30 hours, 28 hours, 26 hours, 24 hours, 22 hours, 20 hours, 18 hours, 15 hours, 10 hours, 9 hours, 8 hours, 7 hours, 6 hours, 5 hours, 4 hours, 3 hours, 2 hours, or 1.5 hours or so. The secondary heat treatment time $M_2$ may be within a range of more than or equal to, or more than any lower limit selected from the above-listed lower limits; or within a range of less than or equal to, or less than any upper limit selected from the above-listed upper limits; or within a range of less than or equal to, or less than any upper limit selected from the above-listed upper limits while being more than or equal to, or more than any lower limit selected from the above-listed lower limits.

By the heat treatment, the alignment state of the hydrocarbon functional groups in the conductive polymer can be appropriately controlled, and accordingly, the desired effect can be obtained.

The method of coating the coating liquid is not particularly limited, and any known coating method may be applied.

In the present application, the desired polymer layer, and the current collector comprising the same are manufactured through the above process. The above process may comprise appropriate post-treatment processes if necessary.

The present application also relates to an electrode comprising the current collector.

As described above, the electrode may sequentially comprise the current collector body; a polymer layer and an active material layer.

The polymer layer may be a polymer layer formed on the current collector body by being included in the current collector as described above. Such a polymer layer may have a uniform and stable thickness through excellent coatability, as described above.

A commonly applied layer can also be used as the active material layer.

Typically, the active material layer comprises an electrode active material. The specific type of the electrode active material is not particularly limited, and materials to form a positive electrode or a negative electrode can usually be used.

For example, when the active material layer is a positive electrode active material layer, the electrode active material may include layered compounds such as lithium cobalt oxide ($LiCoO_2$) or lithium nickel oxide ($LiNiO_2$), or compounds substituted with one or more transition metals; lithium iron oxides such as $LiFe_3O_4$; lithium manganese oxides such as Formula $Li_{1+c1}Mn_{2-c1}O_4$ ($0 \leq c1 \leq 0.33$), $LiMnO_3$, $LiMn_2O_3$, or $LiMnO_2$; lithium copper oxides ($Li_2CuO_2$); vanadium oxides such as $LiV_3O_8$, $V_2O_5$, or $Cu_2V_2O_7$; Ni-site lithium nickel oxides represented by Formula $LiNi_{1-c2}M_{c2}O_2$ (where M is at least one selected from the group consisting of Co, Mn, Al, Cu, Fe, Mg, B and Ga, and $0.01 \leq c2 \leq 0.3$ is satisfied); lithium manganese composite oxides represented by Formula $LiMn_{2-c3}M_{c3}O_2$ (where M is at least one selected from the group consisting of Co, Ni, Fe, Cr, Zn, and Ta, and $0.01 \leq c3 \leq 0.1$ is satisfied) or $Li_2Mn_3MO_8$ (here, M is at least one selected from the group consisting of Fe, Co, Ni, Cu and Zn); lithium nickel cobalt manganese (NCM) composite oxides, lithium nickel cobalt manganese aluminum (NCMA) composite oxides, and $LiMn_2O_4$ in which a part of Li in the formula is substituted with alkaline earth metal ions, and the like, but is not limited thereto.

When the active material layer is a negative electrode active material layer, as the electrode active material, for example, a compound capable of reversible intercalation and deintercalation of lithium may be used. A specific example may include carbonaceous materials such as artificial graphite, natural graphite, graphitized carbon fiber, and amorphous carbon; metallic compounds capable of alloying with lithium, such as Si, Al, Sn, Pb, Zn, Bi, In, Mg, Ga, Cd, Si alloy, Sn alloy, or Al alloy; metal oxides capable of doping and de-doping lithium, such as SiOa ($0 < a < 2$), $SnO_2$, vanadium oxide, and lithium vanadium oxide; or a composite comprising the metallic compound and the carbonaceous materials such as a Si-C composite or a Sn-C composite, and the like, and any one or a mixture of two or more of the foregoing may be used.

A metal lithium thin film may also be used as the negative electrode active material, and as the carbon material, low crystalline carbon and high crystalline carbon, and the like may also be used. As the low crystalline carbon, soft carbon and hard carbon are representative, and as the high crystalline carbon, high-temperature baked carbons such as amorphous, plate-like, scale-like, spherical, or fibrous natural graphite or artificial graphite, Kish graphite, pyrolytic carbon, mesophase pitch based carbon fiber, mesocarbon microbeads, mesophase pitches, and petroleum and coal tar pitch derived cokes are representative.

The electrode active material may be included in the active material layer within a range of about 80 weight% to 99.5 weight%, or within a range of 88 weight% to 99 weight% relative to the total weight of the active material layer, but the ratio may be changed depending on the use or design of the electrode.

The active material layer may further comprise a binder. The binder serves to improve attachment between the active materials, and adhesive force on between the active material layer and the current collector body. An example of the

binder is not particularly limited, and one or more may be selected from the group consisting of, for example, PVDF (poly(vinylidene fluoride), PVA (poly(vinyl alcohol)), SBR (styrene butadiene rubber), PEO (poly(ethylene oxide)), CMC (carboxyl methyl cellulose), cellulose acetate, cellulose acetate butylate, cellulose acetate propionate, cyanoethylpullulan, cyanoethyl polyvinyl alcohol, cyanoethyl cellulose, cyanoethyl sucrose, pullulan, polymethylmethacrylate, polybutylacrylate, polyacrylonitrile, polyvinylpyrrolidone, polyvinylacetate, an ethylene vinyl acetate polymer (polyethylene-co-vinyl acetate), and polyarylate, and used.

In one example, the binder may be included in the active material layer within a range of 0.1 parts by weight to 10 parts by weight, or 0.5 parts by weight to 5 parts by weight relative to 100 parts by weight of the electrode active material, but is not limited thereto.

The active material layer may further comprise a conductive material, as needed. If the conductive material has conductivity without causing chemical changes in the secondary battery, it is not particularly limited, any known material can be used. For example, graphite such as natural graphite or artificial graphite; carbon black, such as carbon black, acetylene black, Ketjen black, channel black, furnace black, lamp black, or thermal black; conductive fibers such as carbon fibers or metal fibers; conductive tubes such as carbon nanotubes (CNTs); metal powders such as fluorocarbon, aluminum, or nickel powder; conductive whiskers such as zinc oxide or potassium titanate; conductive metal oxides such as titanium oxide; conductive materials such as polyphenylene derivatives, and the like may be used.

In one example, the conductive material may be included in the active material layer in an amount of 0.1 parts by weight to 20 parts by weight, or 0.3 parts by weight to 10 parts by weight relative to 100 parts by weight of the electrode active material, but is not limited thereto.

The active material layer may also further comprise any necessary known components in addition to the above-described components optionally.

The present application also relates to a method for manufacturing the electrode.

Such a manufacturing method of the present application may comprise a step of forming the active material layer on the polymer layer on the current collector main body.

Also, the method of forming the active material layer on the polymer layer is not particularly limited. Typically, the active material layer is formed by coating a slurry containing the electrode active material, binder, and conductive material, and the like on the current collector body (on the polymer layer), followed by drying, and then rolling, where such a known method can also be equally applied to the present application.

The present application also relates to an electrode assembly or electrochemical element comprising such an electrode, for example, a secondary battery.

The electrochemical element may comprise the electrode as the positive electrode and/or the negative electrode. If the electrode of the present application is used as the positive electrode and/or the negative electrode, other configurations or manufacturing methods of the electrochemical element are not particularly limited, and known methods can be applied.

## Advantageous Effects

The present application relates to a current collector and a use thereof. The present application can provide a current collector capable of forming an electrode, which does not affect performance and operation of a secondary battery by exhibiting, in a normal state, excellent electrical characteristics including low resistance, and can ensure stability by blocking, in an abnormal state, energization of an electrode assembly through resistance increase, and a use thereof.

## Description of Drawings

Figure 1 is a cross-sectional diagram of an exemplary current collector.
Figure 2 is a cross-sectional diagram of an exemplary electrode.
Figure 3 is NMR analysis results for a monomer of Preparation Example 1.

## Mode for Invention

Hereinafter, the contents of the present application will be described in detail through examples and comparative examples, but the scope of the present application is not limited by the following examples.

## 1. NMR analysis method

$^1$H-NMR analyses were performed at room temperature using an NMR spectrometer including a Bruker

UltraShield spectrometer (300 MHz) with a 5 mm triple resonance probe. A sample was diluted in a solvent ($CDCl_3$) for NMR measurement to a concentration of about 10 mg/ml or so and used, and the chemical shift was expressed in ppm.

**2. GPC (Gel Permeation Chromatograph)**

Molecular weight characteristics were measured using GPC (Gel permeation chromatography). A sample is placed in a 5 mL vial and diluted with chloroform to a concentration of about 1 mg/mL or so. The standard sample for calibration and the sample to be analyzed were filtered through a syringe filter (pore size: 0.45 μm), and then the molecular weight characteristics were measured. As the analysis program, Waters' Empower 3 was used, and a weight average molecular weight (Mw) and a number average molecular weight (Mn) were each obtained by comparing the elution time of the sample with the calibration curve, and the molecular weight distribution (PDI) was calculated by the ratio (Mw/Mn).
The measurement conditions of GPC are as follows.

<GPC measurement conditions>

Device: Waters' 2414

Column: using 3 Styragels from Waters

Solvent: THF (tetrahydrofuran)

Column temperature: 35°C

Sample concentration: 1 mg/mL, 1 μL injection

Standard sample: polystyrene (Mp: 3900000, 723000, 316500, 52200, 31400, 7200, 3940, 485)

**3. Thickness measurement**

The polymer layer or the like was subjected to cross-section using ion milling equipment (Hitachi, IM5000), and then the thickness was measured by photographing an image with a SEM (Scanning Electron Microscope) (JEOL, JSM-7200F). The conditions for forming the cross section by the ion milling were performed by setting the equipment in cross-section milling mode, the speed (reciprocation/min) of 3, the acceleration voltage of 6.0 kV, the discharge voltage of 15 kV, the current of 150 μA, and the time of 4 hours.

**4. Oxidation potential measurement method**

An oxidation potential was measured as follows: A polymer layer with a thickness of about 10 μm was formed on aluminum foil (Al Foil) with a thickness of about 15 μm using a conductive polymer. The polymer layer was formed in the same manner as described in each Example or Comparative examples, with the thickness adjusted to about 10 μm. A separator and a lithium film were laminated onto the polymer layer to prepare a laminate consisting of aluminum foil/polymer layer/separator/lithium film. This laminate was then punched into a circle shape with a diameter of about 1.4 cm. A coin cell was fabricated using the circularly punched laminate and an electrolyte (using Wellcos CR2032 coin cell kit). A WL20C model from W-Scope Korea was used as the separator; and a lithium film with a thickness of about 100 μm was used. For the electrolyte, a product from Enchem was used (1M LiPF6 solution (solvent: EC/DMC/EMC =3/4/3 (mass ratio), EC: Ethylene Carbonate, DMC: dimethyl carbonate, EMC: ethylmethyl carbonate)).
The oxidation potential of the coin cell was measured at 25°C using a potentiostat (Princeton Applied Research, PARASTAT-MC). CV (Cyclic Voltammetry) was performed in the range of 1.5V to 5.5V at a scan rate of 0.17 mV/sec to 0.5 mV/sec to determine the oxidation potential.

**5. AC Impedance resistance measurement**

AC impedance resistance was evaluated through EIS (Electrochemical Impedance Spectroscopy) using the same coin cell as used for oxidation potential measurement (provided that the thickness of the polymer layer was kept the same as in each Examples and Comparative Examples). A voltage of 4.3V was applied to the coin cell for 10 minutes at room temperature (25°C), and a Nyquist plot was obtained using the EIS measurement method in a range of 50,000 Hz to

0.1 Hz. The AC impedance resistance at high frequency ($R_{25}$ in Equation 1) was then measured. An electrochemical meter (potentiostat) (Princeton Applied Research, PARASTAT-MC) was used as the EIS measurement device.

The AC impedance resistance at 130°C ($R_{130}$ in Equation 1) was evaluated as follows: The coin cell was placed in the center of a convection oven (Jeio tech, OF3-05W), and the oven temperature was set to 130°C to measure the AC impedance resistance. The resistance was measured by connecting the coin cell to an external digital multimeter (Fluke's digital multi-tester (FLUKE-87-5)). Before inserting the coin cell, the oven was preheated to 130°C. Once the internal temperature stabilized, the coin cell was placed inside, maintained at that temperature for about 10 minutes, and then the AC impedance resistance $R_{130}$ was measured.

**6. Measurement of 2C discharge efficiency and 30 cycle life**

A coin cell (standard capacity: 200 mAh/g) was fabricated using a CR2032 standard coin cell kit (Welkos CR2032 coin cell kit). The electrode prepared in each of Examples or Comparative Examples was used as a positive electrode, and a lithium film (thickness: 100 μm) was used as a negative electrode. As the electrolyte, a carbonate-based electrolyte comprising a 1M $LiPF_6$ solution (solvent: EC/DMC/EMC=3/4/3 (mass ratio), EC: ethylene carbonate, DMC: dimethyl carbonate, EMC: ethylmethyl carbonate) was used, and a PE (poly(ethylene)) separator (WL20C model from W Scope Korea) was used as a separator. The 2C discharge efficiency and a 30-cycle lifespan of the coin cell were evaluated.

The 2C discharge efficiency was determined by calculating the ratio between two discharge capacities, A and B. Discharge capacity A was measured by charging the coin cell in a CC (Constant Current)/CV (Constant Voltage) mode at a rate of 0.5C with a charging cut-off voltage of 4.5 V and a charging cut-off current of 1 mA, and discharging it in the CC (Constant Current) mode at a rate of 0.1C to a discharging cut-off voltage of 3.0 V. Discharge capacity B was measured by charging the coin cell in a CC (Constant Current)/CV (Constant Voltage) mode at a rate of 2C with a charging cut-off voltage of 4.5 V and a charging cut-off current of 1 mA, and discharging it in the CC (Constant Current) mode at a rate of 2C to a discharging cut-off voltage of 3.0 V. The 2C discharge efficiency was calculated by substituting the discharge capacities A and B into an equation $100 \times B/A$.

In addition, the 30-cycle lifespan was determined by performing 30 charge/discharge cycles (30 cycles) at 45°C for the coin cell. Specifically, one cycle consisted of charging the coin cell in a CC (constant current)/CV (constant voltage) mode at a rate of 0.2C with a charging cut-off voltage of 4.5V and a charging cut-off current of 1mA, and discharging it in a CC (constant current) mode at a rate of 0.2C to a cut-off voltage of 3.0V. This cycle was repeated 30 times. The 30-cycle lifespan was calculated by substituting the discharge capacity C1 after the first cycle, and the discharge capacity C30 after the 30th cycle into an equation $100 \times C30/C1$.

7. Room temperature and high-temperature discharge capacity measurement

A coin cell (standard capacity: 200 mAh/g) was fabricated using a CR2032 standard coin cell kit (Wellcos CR2032 coin cell kit). The electrode prepared in each of Examples or Comparative Examples was used as a positive electrode, and a lithium film (thickness: 100 μm) was used as a negative electrode. As the electrolyte, a 1M $LiPF_6$ solution (solvent: EC/DMC/EMC=3/4/3 (mass ratio), EC: ethylene carbonate, DMC: dimethyl carbonate, EMC: ethylmethyl carbonate), which is a carbonate-based electrolyte, was used. A PE (poly(ethylene)) separator (model WL20C from W-Scope Korea) was used as a separator. The coin cell was subjected to one charge/discharge cycle at 25°C, and the capacity at 0.2C was defined as the discharged capacity at 25°C ($C_{25}$ in Equation 2). One charge/discharge cycle refer to a process in which the cell is charged in a CC (constant current)/CV (constant voltage) mode at a rate of 0.2C with a cut-off voltage of 4.5V and a cut-off current of 1mA, followed by discharging in a CC (constant current) mode at a rate of 0.2C until a cut-off voltage of 3.0V is reached. The discharged capacity measured after this single charge/discharge cycle was designated as the discharged capacity at 25°C ($C_{25}$ in Equation 2).

The discharge capacity at 130°C ($C_{130}$ in Equation 2) was measured separately. According to the procedure for measuring the discharge capacity $C_{25}$, the coin cell was charged in a CC (constant current)/CV (constant voltage) mode at a rate of 0.2C, with the cut-off voltage at 4.5V and the cut-off current at1mA, and the charged coin cell was then stored at 130°C for 10 minutes before measuring the discharge capacity $C_{130}$. The discharge capacity $C_{130}$ was measured by discharging the coin cell, which had been charged and stored at 130°C for 10 minutes, in a CC (constant current) mode at a rate of 1C until the cut-off voltage reached 3.0V. The discharging process was performed at 130°C.

**8. Measurement of average particle diameter of conductive particles**

An average particle diameter (D50 particle diameter) of conductive particles was measured using a MASTERSIZER3000 device from Marvern in accordance with ISO-13320 standard. Toluene was used as a solvent upon measurement. If a sample (conductive particles) is dispersed in the solvent and the laser is irradiated, the laser is scattered by the sample dispersed in the solvent. Since the intensity and directionality of the scattered laser vary

depending on the size of the particle, the average particle diameter can be obtained by analyzing this using a Mie theory. Through the above analysis, the measurement results were converted into particle diameters of spheres having the same volume as the dispersed sample to obtain a volume-based cumulative graph of particle size distribution, and the particle diameter (median particle diameter) at 50% accumulation of the graph was designated as the average particle diameter (D50 particle diameter).

**Preparation Example 1. Synthesis of monomer (A)**

The monomer of the following Formula A was synthesized in the following manner.

[Formula A]

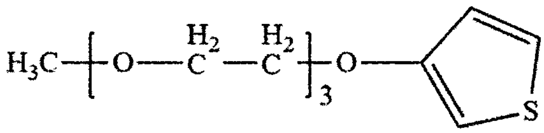

3 g (26.28 mmol, 1 eq) of 3-methoxythiophene and 7.03 g (39.42 mmol, 1.5 eq) of triethylene glycol monomethyl ether were dissolved in 150 ml of toluene together with 500 mg of p-toluenesulfonic acid (p-TsOH) (2.63 mmol, 0.1 eq). The mixture was refluxed at 120°C under a nitrogen atmosphere, and simultaneously reacted, whereby methanol produced by the reaction (transetherification) was removed by a 4A type molecular sieve filled in an extractor (soxhlet extractor). The reactant was cooled to room temperature after reflux for 24 hours, and then quenched with water, extracted with ethyl acetate, and then washed with brine, and dried over magnesium sulfate ($MgSO_4$). The solvent was removed by a rotary evaporator, and the residue was purified by column chromatography eluting with methylene chloride/hexane (2:1) to obtain the target compound (monomer (A)). The NMR analysis results for the monomer (A) are as shown in Figure 3.

**Preparation Example 2. Synthesis of polythiophene (B)**

To a solution in which 3.20 g (19.71 mmol, 3 eq) of iron (III) chloride was dissolved in 150 ml of methylene chloride. 1 g (3.94 mmol, 0.6 eq) of 3-dodecylthiophene, 0.33 g (1.97 mmol, 0.3 eq) of 3-hexylthiophene, and 0.16 g (0.66 mmol, 0.1 eq) of the monomer (A) of Preparation Example 1 were introduced, and polymerized at 30°C for 24 hours to produce polythiophene (A). The polymerization solution was placed in an osmosis membrane with an MWCO (molecular weight of cut-off) of 5000, and then immersed in 200ml of an acetonitrile solvent to remove unreacted iron (III) chloride, monomers, and low-molecular-weight oligomers. The residue precipitated inside the osmosis membrane was washed with methanol, and dried at 60°C for 12 hours to produce polythiophene (A). The weight-average molecular weight (Mw) and number-average molecular weight (Mn) of polythiophene (A) were 118,000 g/mol and 24,500 g/mol, respectively.

**Preparation Example 3. Polydopamine-coated conductive particles (A)**

Carbon black particles (IMERYS, C-NERGY™ SUPER C65) were used as the conductive particles. The average particle diameter (D50 particle diameter) of the conductive particles was about 30 nm or so. DHC (dopamine hydrochloride) (CAS No. 62-31-7) was added to a buffer solution and stirred at room temperature (about 25°C). As the buffer solution, BIOSESANG's 0.1M pH 8.5 Tris-buffer product was used. The molar concentration of DHC in the final solution was about 2 mg/mL or so. The conductive particles were dispersed (sonication for 1 hour) in the mixture of the buffer solution and DHC at a concentration of about 4 mg/mL, and stirred for additionally about 18 hours to form a coating layer of polydopamine on the conductive particles. After filtering under reduced pressure using a paper filter, the resultant particles were vacuum-dried to obtain conductive particles coated with polydopamine.

**Preparation Example 4. Polydopamine-coated conductive particles (B)**

Conductive particles coated with polydopamine were obtained in the same manner as in Preparation Example 3, except that carbon black particles (Aldrich, Carbon nanopowder) having an average particle diameter (D50 particle diameter) of about 100 nm or so were used as the conductive particles.

**Example 1.**

Polythiophene (B) of Preparation Example 2 and the conductive particles (A) of Preparation Example 3 were mixed in a weight ratio of 80:20 (polythiophene: conductive particles), and the mixture was dispersed in a solvent

(chloroform) at a concentration of about 2 weight% or so to prepare a coating liquid. The coating liquid was coated on a current collector body by a bar coating method, and heat-treated (drying) at 140°C for 4 minutes or so, and then heat-treated (annealing) at 130°C for 1 hour or so to form a polymer layer with a thickness of about 500 nm. As the current collector body, an Al foil with a thickness of about 15 μm or so was used. Subsequently, an active material layer was formed on the polymer layer. A slurry containing lithium cobalt oxide ($LiCoO_2$), a carbon-based conductive material (ECP (Ketjen Black) 0.5%, SFG (Trimrex graphite) 0.4%, DB (Denka Black) 0.4%), PVDF (polyvinylidene fluoride), and NMP (N-methyl-2-pyrrolidone) in a weight ratio of 75:1:1:23 ($LiCoO_2$: conductive material: PVDF: NMP) was applied to a thickness of about 90 μm or so on the polymer layer using a doctor blade, dried at room temperature (about 25°C), and then further dried under vacuum conditions at 120°C to form the active material layer. Subsequently, an electrode was manufactured by rolling it to have a porosity of about 25% or so.

**Example 2.**

A current collector and an electrode were manufactured in the same manner as in Example 1, except that upon forming the polymer layer, a coating liquid prepared by mixing the polythiophene (B) of Preparation Example 2 and the conductive particles (A) of Preparation Example 3 in a weight ratio of 70:30 (polythiophene: conductive particles), and dispersing the mixture in a solvent (chloroform) at a concentration of 2 weight% or so was used.

**Example 3.**

A current collector and an electrode were manufactured in the same manner as in Example 1, except that upon forming the polymer layer, a coating liquid prepared by mixing the polythiophene (B) of Preparation Example 2 and the conductive particles (A) of Preparation Example 3 in a weight ratio of 60:40 (polythiophene: conductive particles), and dispersing the mixture in a solvent (chloroform) at a concentration of 2 weight% or so was used.

**Comparative Example 1.**

A current collector and an electrode were manufactured in the same manner as in Example 1, except that upon forming the polymer layer, a coating liquid prepared by dispersing only the polythiophene (B) of Preparation Example 2 in a solvent (chloroform) at a concentration of 2 weight% or so was used.

**Comparative Example 2.**

A current collector and an electrode were manufactured in the same manner as in Example 1, except that upon forming the polymer layer, a coating liquid prepared by mixing the polythiophene (B) of Preparation Example 2 and the conductive particles (A) of Preparation Example 3 in a weight ratio of 40:60 (polythiophene: conductive particles), and dispersing the mixture in a solvent (chloroform) at a concentration of 2 weight% or so was used.

**Comparative Example 3.**

A current collector and an electrode were manufactured in the same manner as in Example 3, except that the conductive particles (B) of Preparation Example 4 were used instead of the conductive particles (A) of Preparation Example 3.

**Comparative Example 4.**

An electrode was manufactured by forming an active material layer directly on a current collector body without forming a polymer layer.

The measurement results for the polymer layers, current collectors, or electrodes manufactured in Examples and Comparative Examples are summarized in Tables 1 and 2 below. In Tables 1 and 2 below, the 25C resistance is the AC impedance resistance (R25 in Equation 1) (Ω) at room temperature (25°C) measured according to the AC impedance resistance measurement method, and the 130C resistance is the AC impedance resistance (R130 in Equation 1) (Ω) at 130°C measured according to the AC impedance resistance measurement method.

In addition, in Tables 1 and 2 below, the 25C discharge capacity is the discharge capacity at 25°C ($C_{25}$ in Equation 2) measured according to the room temperature and high-temperature discharge capacity measurement methods, and the 130C discharge capacity is the discharge capacity at 130°C ($C_{130}$ in Equation 2) measured according to the room temperature and high-temperature discharge capacity measurement methods.

[Table 1]

| | Example | | |
|---|---|---|---|
| | 1 | 2 | 3 |
| 2C discharge efficiency | 80.8 | 81.7 | 82.5 |
| 30 Cycle lifespan | 95.2 | 97.8 | 99.1 |
| 25C resistance | 10.5 | 8.6 | 7.7 |
| 130C resistance | 250 | 200 | 174 |
| ΔR (%) in Equation 1 | 2281 | 2226 | 2160 |
| 25C discharge capacity | 187.8 | 189.2 | 190.3 |
| 130C discharge capacity | 25.6 | 35.2 | 40.3 |
| ΔC (%) in Equation 2 | 86.4 | 81.4 | 78.8 |

[Table 2]

| | Comparative Example | | | |
|---|---|---|---|---|
| | 1 | 2 | 3 | 4 |
| 2C discharge efficiency | 65.4 | 90 | 80 | 90 |
| 30 Cycle lifespan | 73.4 | 99 | 85 | 99 |
| 25C resistance | 40 | 5.3 | 8.2 | 1.7 |
| 130C resistance | 310 | 13.2 | 17.3 | 1.8 |
| ΔR (%) in Equation 1 | 675 | 149 | 111 | 5.8 |
| 25C discharge capacity | 187.0 | 190.7 | 189.0 | 192.1 |
| 130C discharge capacity | 21.2 | 164.5 | 157.8 | 158.4 |
| ΔC (%) in Equation 2 | 88.7 | 13.7 | 16.5 | 17.5 |

Through the results of Tables 1 and 2, in the case of the electrodes according to the present application, it can be confirmed that in the normal state, they exhibit low resistance, and thus do not affect the performance and operation of the secondary battery, and in the abnormal state caused by overcharge, high-temperature exposure, external impact, and the like, they block energization of the electrode assembly through resistance increase, and thus exhibit characteristics in which stability can be secured.

## Claims

**1.** A current collector, comprising:

a current collector body; and
a polymer layer formed on one side or both sides of the current collector body,

wherein

the polymer layer comprises a conductive polymer and conductive particles, and
an AC impedance resistance is less than 40 Ω at 25°C, and
a ΔR in Equation 1 below is 200% or more:

[Equation 1]

$$\Delta R = 100 \times (R_{130} - R_{25})/R_{25}$$

wherein, the $R_{25}$ is the AC impedance resistance at 25°C, and the $R_{130}$ is the AC impedance resistance at 130°C.

**2.** The current collector according to claim 1, wherein an absolute value of a ΔC in Equation 2 below is 20% or more:

[Equation 2]

$$\Delta C = 100 \times (C_{25}-C_{130})/C_{25}$$

wherein, the $C_{25}$ is a discharge capacity at 25°C, and the $C_{130}$ is a discharge capacity after storage at 130°C for 10 minutes.

**3.** The current collector according to claim 1, wherein the conductive polymer has a long-chain hydrocarbon functional group.

**4.** The current collector according to claim 3, wherein the conductive polymer comprises, as the long-chain hydrocarbon functional group, a first hydrocarbon functional group with 10 or more carbon atoms and a second hydrocarbon functional group with 9 or less carbon atoms.

**5.** The current collector according to claim 4, wherein a ratio of the sum of mole numbers of a monomer unit having the first hydrocarbon functional group and a monomer unit having the second hydrocarbon functional group in the conductive polymer is 70 mol% or more.

**6.** The current collector according to claim 5, wherein a ratio $M_2/M_1$ of a mole number $M_2$ of the monomer unit having the second hydrocarbon functional group to a mole number $M_1$ of the monomer unit having the first hydrocarbon functional group is in a range of 0.01 to 100.

**7.** The current collector according to claim 3, wherein the conductive polymer further has a polar functional group.

**8.** The current collector according to claim 7, wherein the polar functional group is carboxyl group, hydroxy group, amino group, cyano group, nitro group, ether group, or functional group of Formula 3 below:

[Formula 3]

$$-L_4-O-\left[L_3-O\right]_n-R_5$$

wherein, the $L_4$ is a single bond, an alkylene group, or an alkylidene group, the $L_3$ is an alkylene group or an alkylidene group, the $R_5$ is hydrogen or an alkyl group, and the n is a number in a range of 1 to 10.

**9.** The electrode according to claim 7, wherein a ratio $M_L/M_P$ of a mole number $M_L$ of a monomer unit having the long-chain hydrocarbon functional group to a mole number $M_P$ of a monomer unit having the polar functional group in the conductive polymer is in a range of 1 to 500.

**10.** The electrode current collector according to claim 1, wherein the conductive particles are carbon particles, carbon fibers, graphene, graphite, carbon black, or carbon nanotubes.

**11.** The current collector according to claim 1, wherein the conductive particles have an average size of less than 100 nm.

**12.** The current collector according to claim 1, wherein an amount of the conductive polymer in the polymer layer is in a range of 40 to 99 weight%.

**13.** The current collector according to claim 12, wherein the conductive particles are comprised in an amount of 1 to 145 parts by weight relative to 100 parts by weight of the conductive polymer.

**14.** An electrode, comprising:

the current collector of any one of claims 1 to 13; and
an active material layer formed on the polymer layer of the current collector.

**15.** The electrode according to claim 14, wherein the active material layer comprises a positive electrode active material.

**16.** An electrode assembly comprising the electrode of claim 14.

**17.** A secondary battery comprising the electrode of claim 14.

**18.** A secondary battery comprising the electrode assembly of claim 16.

[Figure 1]

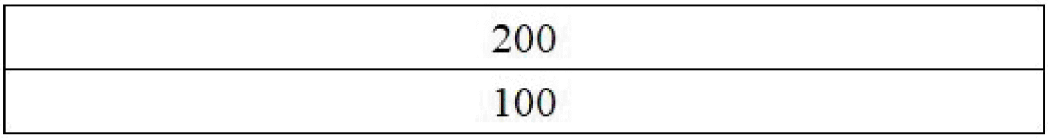


[Figure 2]

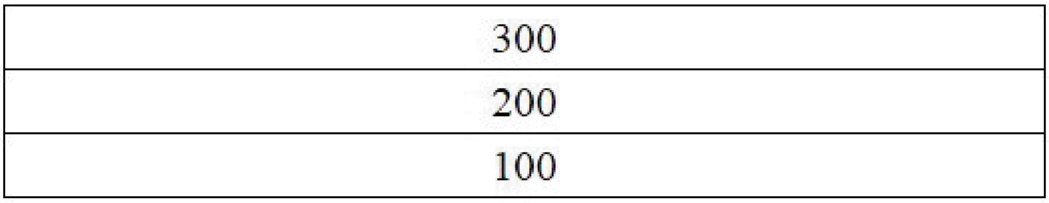


[Figure 3]

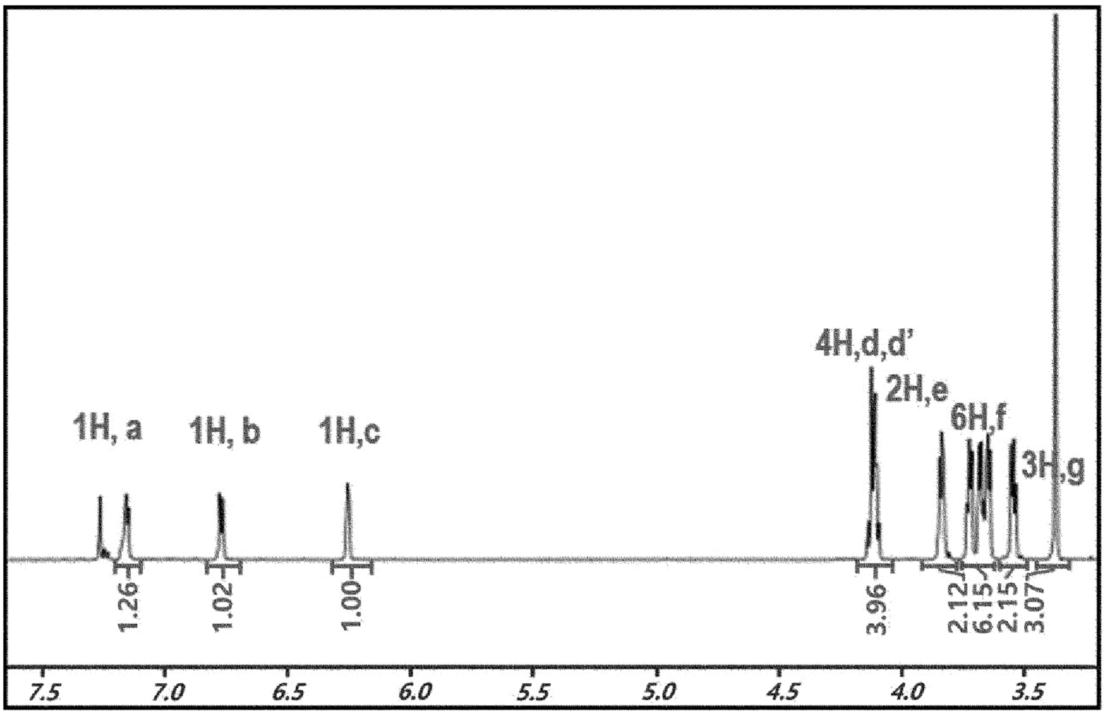

**INTERNATIONAL SEARCH REPORT**

International application No. **PCT/KR2024/012216**

**A. CLASSIFICATION OF SUBJECT MATTER**

**H01M 4/66**(2006.01)i; **H01M 4/13**(2010.01)i; **H01M 10/052**(2010.01)i

According to International Patent Classification (IPC) or to both national classification and IPC

**B. FIELDS SEARCHED**

Minimum documentation searched (classification system followed by classification symbols)

H01M 4/66(2006.01); H01M 10/052(2010.01); H01M 10/0587(2010.01); H01M 10/42(2006.01); H01M 2/26(2006.01); H01M 4/134(2010.01); H01M 4/485(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이차전지(secondary battery), 집전체(current collector), 고분자층(polymer layer), 전도성 고분자(conductive polymer), 도전 입자(conductive particle), 임피던스 저항(impedance resistance)

**C. DOCUMENTS CONSIDERED TO BE RELEVANT**

| Category* | Citation of document, with indication, where appropriate, of the relevant passages | Relevant to claim No. |
|---|---|---|
| Y | LI, H. et al. Building a Thermal Shutdown Cathode for Li-Ion Batteries Using Temperature-Responsive Poly(3-Dodecylthiophene). Energy Technology. 2020, vol. 8, thesis no.: 2000365, pp. 1-9. See abstract; pages 2, 4 and 8; and figures 1(a) and 2(d). | 1-18 |
| Y | KR 10-0670485 B1 (SAMSUNG SDI CO., LTD.) 16 January 2007 (2007-01-16) See claims 1, 6-8 and 10; and paragraph [0021]. | 1-18 |
| Y | US 2021-0351413 A1 (GLOBAL GRAPHENE GROUP, INC.) 11 November 2021 (2021-11-11) See claims 1, 5, 10 and 13. | 4-6 |
| Y | KR 10-2022-0043773 A (LG ENERGY SOLUTION, LTD.) 05 April 2022 (2022-04-05) See claims 1, 3, 5, 6 and 14-18; and paragraphs [0033]-[0041], [0046]-[0048], [0126], [0127], [0135] and [0136]. | 7-9 |
| A | KR 10-2023-0037451 A (LG ENERGY SOLUTION, LTD.) 16 March 2023 (2023-03-16) See claims 1-9; and paragraphs [0064]-[0066]. | 1-18 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **27 November 2024** | **27 November 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/012216**

| Patent document cited in search report | Publication date (day/month/year) | Patent family member(s) | Publication date (day/month/year) |
|---|---|---|---|
| KR 10-0670485 B1 | 16 January 2007 | None | |
| US 2021-0351413 A1 | 11 November 2021 | None | |
| KR 10-2022-0043773 A | 05 April 2022 | CN 116420247 A | 11 July 2023 |
| | | EP 4203094 A1 | 28 June 2023 |
| | | EP 4203094 A4 | 13 November 2024 |
| | | US 2023-0335709 A1 | 19 October 2023 |
| | | WO 2022-071704 A1 | 07 April 2022 |
| KR 10-2023-0037451 A | 16 March 2023 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020230108436


### Non-patent literature cited in the description


- *CHEMICAL ABSTRACTS*, 62-31-7